# EUROPEAN PATENT SPECIFICATION

(11) **EP 3 756 923 B1**
(45) Date of publication and mention of the grant of the patent: **15.12.2021**
(21) Application number: 20179559.8
(22) Date of filing: 11.06.2020
(51) Int. Cl.: B60K 6/445, B60K 6/365, B60K 6/387, B60W 10/02, B60W 10/06, B60W 10/08

(54) **CONTROL SYSTEM FOR HYBRID VEHICLE**
STEUERUNGSSYSTEM FÜR HYBRIDFAHRZEUG
SYSTÈME DE COMMANDE POUR VÉHICULE HYBRIDE

(30) Priority: 12.06.2019 JP 2019109650
(43) Date of publication of application: 30.12.2020
(73) Proprietor: TOYOTA JIDOSHA KABUSHIKI KAISHA, Toyota-shi, Aichi 471 8571 (JP)
(72) Inventor: ISAMI, Yoichiro, TOYOTA-SHI, AICHI 471-8571 (JP); IMAMURA, Tatsuya, TOYOTA-SHI, AICHI 471-8571 (JP)
(74) Representative: Cabinet Beau de Loménie

(56) References cited:
- WO-A1-2015/142258
- US-A1- 2010 116 235
- US-A1- 2019 084 554
- US-B2- 7 771 310

## Description

### CROSS REFERENCE TO RELATED APPLICATIONS

The present invention claims the benefit of Japanese Patent Application No. 2019-109650 filed on June 12, 2019 with the Japanese Patent Office.

### BACKGROUND

### Field of the Invention

Embodiments of the present invention relate to the art of a control system for a hybrid vehicle having an engine and a motor serving as a prime mover, and a power transmission mechanism that switch a mode to transmit a torque between the prime mover and drive wheels depending on a running condition.

### Discussion of the Related Art

JP-A-2018-103690 describes a control system for a hybrid vehicle comprising: a prime mover including an engine, a first motor, and a second motor; a first power transmission path for transmitting torques of the engine and the first motor to a pair of drive wheels; and a second power transmission path for transmitting torque of the second motor to the drive wheels. The first torque transmission path comprises a power split mechanism including two sets of planetary gear units that synthesizes output torques of the engine and the first motor and distributes those torques to drive wheels. The first torque transmission path further comprises a first clutch and a second clutch that selectively connect any two of rotary elements of the planetary gear units, and a brake that is engaged to stop a rotation of an output shaft of the engine and to transmit the output torque of the engine to the pair of drive wheels while reversing a direction. According to the teachings of JP-A-2018-103690, an operating mode of the hybrid vehicle is shifted among a plurality of modes by manipulating the first clutch, the second clutch and the brake depending on a running condition, so as to change a torque transmitting condition (i.e., a power split ratio or a speed ratio). On the other hand, an output torque of the second motor is transmitted to the drive wheels through the second torque transmission path.

WO 2013/114594 A1 describes a driving device for a hybrid vehicle in which a prime mover includes an engine, a first motor, and a second motor. In the hybrid vehicle taught by WO 2013/114594 A1, the engine is connected to driving wheels side through a first planetary gear mechanism serving as a power split mechanism, the first motor is connected to the driving wheels side through the first planetary gear mechanism and a second planetary gear mechanism, and the second motor is connected to the second planetary gear mechanism and the diving wheels through a reduction gear, a counter gear and so on. The first planetary gear mechanism includes a clutch that selectively connects a sun gear to a carrier, and a brake that selectively stops a rotation of the sun gear. According to the teachings of WO 2013/114594 A1, an operating mode of the hybrid vehicle may be shifted among a plurality of modes including an HV low mode and an HV high mode depending on a running condition, by manipulating the clutch and the brake. For example, in the HV low mode, the rotation of the engine is transmitted at an equivalent speed without being accelerated or decelerated. On the other hand, in the HV high mode, the rotation of the engine is accelerated thereby causing overdrive condition.

In the hybrid vehicles described in JP-A-2018-103690 and WO 2013/114594 A1, an operating mode is shifted by manipulating the clutches and the brake. To this end, according to any of the teachings of JP-A-2018-103690 and WO 2013/114594 A1, those clutches and brake may be operated independently, that is, the clutches and the brake are not mechanically related to one another. In order to control such engagement devices, an engagement state of the engagement device may be detected by a sensor arranged at e.g., a stroke end of an actuator. However, when the actuator of the engagement device is being actuated, a commencement of actuation may be detected by the sensor, but a fact that the actuator reaches the stroke end cannot be detected by the sensor. That is, an actual position of the actuator of the engagement device may not be determined accurately, and hence the engagement device may not be controlled properly if some other control has to be implemented.

As described, in the hybrid vehicles described in JP-A-2018-103690 and WO 2013/114594 A1, the operating mode is shifted by manipulating the clutches and the brake. For this purpose, the engagement devices are engaged and disengaged based on a command signal. However, if a driver executes some kind of operations intervening a shifting operation of the operating mode during a mode shift event, or in the event of failure during a mode shift event, a command signal to the engagement device may be changed. In fact, the engagement device is actuated with a slight delay relative to the transmission of the command signal. Therefore, if the command signal is changed during the mode shift event, an actual behavior of the engagement device may not be changed immediately in accordance with the new command signal. In this case, therefore, an actual state of the engagement device may differ from a state determined by a controller. Consequently, a speed of the engine may be raised or a drive torque may be dropped unintentionally. Additionally, U.S. Patent Application Publication No. US2019084554A1 discloses a control apparatus for a vehicular power transmitting system which switches a vehicle from one of different drive modes to another.

### SUMMARY

Aspects of embodiments of the present invention have been conceived noting the foregoing technical problems, and it is therefore an object of the present invention to provide a control system for a hybrid vehicle that accurately determines actual engagement states of engagement devices to control the hybrid vehicle properly in a stable manner.

The control system according to the exemplary embodiment of the present invention is according to claim 1. The control system is applied to a hybrid vehicle, comprising: a prime mover including an engine and a plurality of electric rotary machines; a power transmission mechanism comprising at least a first engagement device and a second engagement device; and a controller that controls the engagement devices. The engagement devices are selectively engaged to transmit torque between the prime mover and at least one pair of drive wheels, and that are manipulated to change a torque transmitting condition. An operating mode of the hybrid vehicle is shifted to change the torque transmitting condition among at least: a first mode that is established by engaging the first engagement device while disengaging the second engagement device; a second mode that is established by engaging the second engagement device while disengaging the first engagement device; and a fixed mode that is established by engaging both of the first engagement device and the second engagement device. In order to achieve the above-explained objective, according to the exemplary embodiment of the present invention, the controller is configured to: shift the operating mode from the first mode to the second mode based on a command signal by shifting from the first mode to the fixed mode by engaging the second engagement device while maintaining engagement of the first engagement device, and thereafter shifting from the fixed mode to second mode by disengaging the first engagement device while maintaining engagement of the second engagement device; and fix the command signal to shift the operating mode from the first mode to the second mode to complete the shifting operation from the first mode to the second mode based on the command signal, after the operating mode has been shifted from the first mode to the fixed mode.

The controller is further configured to actuate the first engagement device and the second engagement device so as to shift the operating mode to the mode other than the second mode after completion of the disengaging operation of the first engagement device to shift the operating mode to the second mode, if the command signal to shift the operating mode from the first mode to the second mode is cancelled or changed shift the operating mode to the mode other than the second mode during execution of the shifting operation from the first mode to the second mode, after the operating mode has been shifted from the first mode to the fixed mode but before completion of the disengaging operation of the first engagement device.

In a non-limiting embodiment, the control system for the hybrid vehicle may further comprise a detector that detects a physical amount relating to a stroke of each of the first engagement device and the second engagement device. In addition, the controller may be further configured to determine the completion of the engaging/ disengaging operation of each of the first engagement device and the second engagement device based on a result of comparison between the physical amount relating to a stroke of the each of the first engagement device and the second engagement device and a predetermined threshold.

In a non-limiting embodiment, the control system for the hybrid vehicle may further comprise: an actuator that is actuated to actuate the engagement devices when energized; and a relay that selectively interrupt current supply to the actuator in accordance with a control signal. In addition, the controller may be further configured to engage or disengage the engagement devices by controlling the relay.

In a non-limiting embodiment, the first engagement device and the second engagement device may include a dog clutch.

Thus, according to the exemplary embodiment of the present invention, the operating mode of the hybrid vehicle may be shifted at least among the first mode, the second mode, and the fixed mode by manipulating the engagement devices of the power transmission mechanism, depending on a running condition. For example, the operating mode is shifted from the first mode to the second mode via the fixed mode. In this case, specifically, the operating mode is temporarily shifted from the first mode in which only the first engagement device is engaged to the fixed mode by engaging the second engagement device, and then shifted from the fixed mode to the second mode by disengaging the first engagement device. As described, the control system according to the exemplary embodiment of the present invention is configured to fix the command signal to shift the operating mode from the first mode to the second mode after the operating mode has been shifted from the first mode to the fixed mode. Specifically, when both of the first engagement device and the second engagement device are engaged so that the operating mode is shifted from the first mode to the fixed mode, the disengaging operation of the first clutch is continued while maintaining the engagement of the second clutch until the operating mode is shifted from the fixed mode to the second mode. In other words, operations of the engagement devices other than the disengaging operation of the first engagement device based on the command signal are restricted after the operating mode has been shifted from the first mode to the fixed mode. According to the exemplary embodiment of the present invention, therefore, the engaging and disengaging operations of the first engagement device and the second engagement device will not be executed simultaneously contrary to the command signal. For this reason, even if the initial command signal to shift the operating mode is cancelled thereby changing actuating directions of the first engagement device and the second engagement device during execution of the engagement and disengagement operations, inconsistency between the actual engagement states of those engagement devices and the engagement states of those engagement devices recognized by the control system can be resolved. Consequently, the hybrid vehicle can be controlled properly in a stable manner based on the actual engagement states of the engagement devices.

In a case that the command signal to shift the operating mode from the first mode to the second mode is cancelled before the operating mode is shifted from the first mode to the fixed mode, only the second engagement device being engaged has to be controlled in response to the cancellation of the initial command signal. That is, the first engagement device and the second engagement device will not be actuated simultaneously, and hence an interference between the first engagement device and the second engagement device will not be caused. In this case, therefore, the control system may recognize the actual engagement states of the first engagement device and the second engagement device accurately.

In a case that the command signal to shift the operating mode from the first mode to the second mode is cancelled or changed to shift the operating mode other than the second mode after the operating mode has been shifted from the first mode to the fixed mode and the first engagement device is being disengaged, the first engagement device and the second engagement device are actuated to establish the other mode after the completion of disengagement of the first engagement device to shift the operating mode to the second mode. In other words, operations of the engagement devices other than the disengaging operation of the first engagement device based on the initial command signal to shift the operating mode from the first mode to the second mode are restricted after the operating mode has been shifted from the first mode to the fixed mode. Therefore, the engaging and disengaging operations of the first and the second engagement devices will not be executed simultaneously contrary to the initial command signal. For this reason, even if the initial command signal to shift the operating mode is cancelled thereby changing actuating directions of the first engagement device and the second engagement device during execution of the engagement and disengagement operations, inconsistency between the actual engagement states of those engagement devices and the engagement states of those engagement devices recognized by the control system can be resolved. According to the exemplary embodiment of the present invention, therefore, the hybrid vehicle can be controlled properly in a stable manner based on the actual engagement states of the engagement devices.

According to the exemplary embodiment of the present invention, an engagement state of the engagement device is determined based on a result of comparison between a physical amount relating to an engagement state of the engagement device and a predetermined threshold parameter. According to the exemplary embodiment of the present invention, therefore, an engagement state of the engagement device can be determined easily. Nonetheless, before the physical amount relating to the engagement state of the engagement device reaches the threshold value, the engagement device has already been actuated but the control system still recognizes that the engagement states of the engagement device has not yet been changed. That is, an inconsistency between the actual engagement states of the engagement devices and the engagement states of the engagement devices recognized by the control system may occur. However, the control system according to the exemplary embodiment of the present invention is configured to restrict the operations of the engagement devices other than the operation of the engagement device being executed to shift the operating mode based on the initial command signal to shift the operating mode, if the initial command signal is cancelled after the operating mode has been shifted to the fixed mode. According to the exemplary embodiment of the present invention, therefore, inconsistency between the actual engagement states of the engagement devices and the engagement states of the engagement devices recognized by the control system can be avoided even if the initial command signal to shift the operating mode is cancelled during execution of the engagement and disengagement operations of the engagement devices to shift the operating mode based on the initial command signal.

As described, according to the exemplary embodiment of the present invention, current supply to the actuators of the engagement devices may be controlled by the relay. According to the exemplary embodiment of the present invention, therefore, one of the engagement devices can be actuated easily and certainly after the completion of engagement/disengagement operation of the other one of the engagement devices. For this reason, the operating mode of the hybrid vehicle will not be shifted independently from the actual engagement states of the engagement devices. That is, the shifting operation of the operating mode can be executed properly in a stable manner.

As also described, according to the exemplary embodiment of the present invention, the dog clutch that is engaged substantially completely and a substantially complete disengagement may be adopted as the first engagement device and the second engagement device respectively. According to the exemplary embodiment of the present invention, therefore, the control system will not falsely recognize that the engagement device is disengaged in a situation where a command signal to shift the operating mode by disengaging the engagement device has been transmitted but the engagement device is still in engagement. Likewise, the control system will not falsely recognize that the engagement device is engaged in a situation where a command signal to shift the operating mode by engaging the engagement device has been transmitted but the engagement device is still in disengagement.

### BRIEF DESCRIPTION OF THE DRAWINGS

Features, aspects, and advantages of exemplary embodiments of the present invention will become better understood with reference to the following description and accompanying drawings, which should not limit the invention in any way.
FIG. 1 is a schematic illustration showing one example of a gear train of a hybrid vehicle to which the control system according to the embodiment of the present invention is applied;
FIG. 2 is a block diagram showing one example of a structure of the control system according to the embodiment of the present invention;
FIG. 3 is a schematic illustration showing one example of a structure of a rear drive unit (motor drive unit) employed in a four-wheel drive layout vehicle in which the gear train shown in Fig. 1 is employed as a front drive unit;
FIG. 4 is a table showing engagement states of engagement devices and operating conditions of the prime movers in each operating mode;

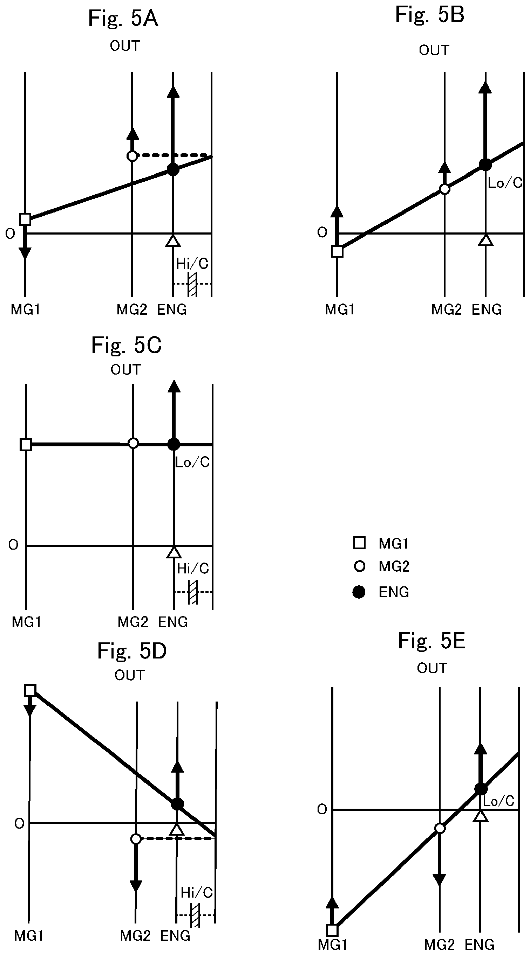

FIG. 5A is a nomographic diagram showing a situation of the hybrid vehicle when propelled in the forward direction in a HV-Low mode, FIG. 5B is a nomographic diagram showing a situation of the hybrid vehicle when propelled in the forward direction in a HV-High mode, FIG. 5C is a nomographic diagram showing a situation of the hybrid vehicle when propelled in a fixed mode, FIG. 5D is a nomographic diagram showing a situation of the hybrid vehicle when propelled in the reverse direction in the HV-Low mode, and FIG. 5E is a nomographic diagram showing a situation of the hybrid vehicle when the hybrid vehicle is propelled in the reverse direction in the HV-High mode;
FIG. 6A is a nomographic diagram showing a situation of the hybrid vehicle when propelled in a dual-motor mode of an EV-Low mode, FIG. 6B is a nomographic diagram showing a situation of the hybrid vehicle when propelled in a dual-motor mode of an EV-High mode, and FIG. 6C is a nomographic diagram showing a situation of the hybrid vehicle when propelled in a single-motor mode of an MG1 disconnecting mode;
FIG. 7 is a time chart showing situations of the first clutch and the second clutch in a case of shifting the operating mode from the Low mode to the High mode;
FIG. 8 is a time chart showing situations of the first clutch and the second clutch in a case that a command signal to shift the operating mode from the Low mode to the High mode is cancelled during execution of the mode shift operation executed by a conventional control system;
FIG. 9 is a flowchart showing one example of a routine to be executed by the control system according to the exemplary embodiment of the present invention;
FIG. 10 is a time chart showing situations of the first clutch and the second clutch in a case that a command signal to shift the operating mode from the Low mode to the High mode is cancelled before shifting from the Low mode to the fixed mode during execution of the routine shown in Fig. 9;
FIG. 11 is a time chart showing situations of the first clutch and the second clutch in a case that the command signal to shift the operating mode from the Low mode to the High mode is cancelled after shifting from the Low mode to the fixed mode during execution of the routine shown in Fig. 9;
FIG. 12 is a flowchart showing another example of a routine to be executed by the control system according to the exemplary embodiment of the present invention;
FIG. 13 is a time chart showing situations of the first clutch and the second clutch during execution of the routine shown in Fig. 12; and
FIG. 14 is a schematic illustration showing another example of the hybrid vehicle in which the clutches are controlled by a relay.

### DETAILED DESCRIPTION OF THE PREFERRED EMBODIMENT(S)

Preferred embodiments of the present invention will now be explained with reference to the accompanying drawings.

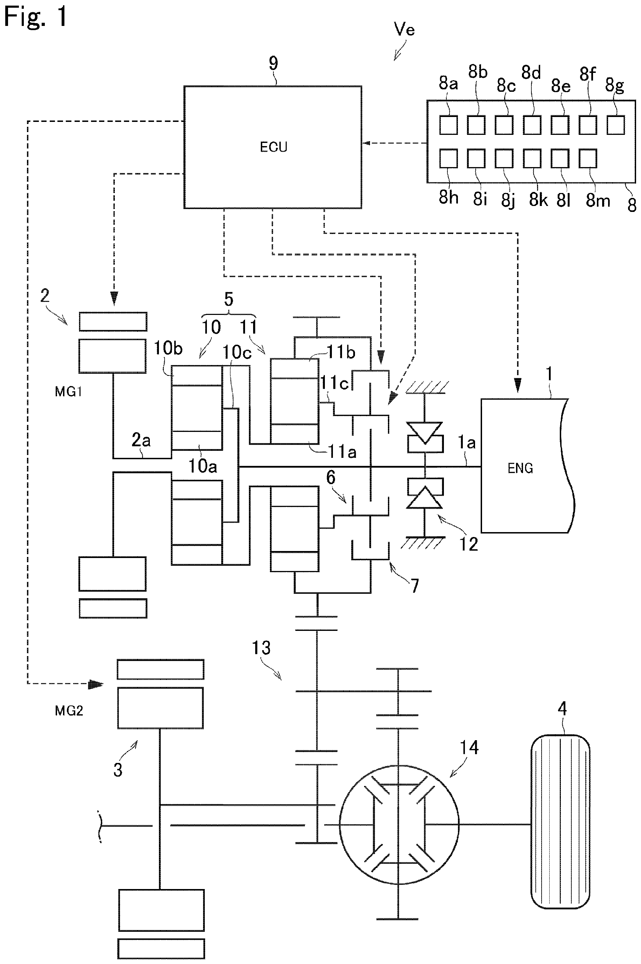

The control system according to the embodiment of the present discloser is applied to a hybrid vehicle in which a prime mover includes an engine and an electric rotary machine. The hybrid vehicle comprises a power transmission unit that transmits a torque between the engine and the motor. The power transmission comprises a plurality of engagement devices such as a clutch and a brake, and an operating mode of the hybrid vehicle is changed by manipulating the engagement devices. Referring now to Fig. 1, there is shown one example of a drive unit of the hybrid vehicle (as will be simply called the "vehicle" hereinafter) Ve to which the control system according to the exemplary embodiment is applied.

A prime mover of the vehicle Ve includes an engine 1 (also referred to as "ENG" in the drawings), a first motor (also referred to as "MG1" in the drawings) 2, and a second motor (also referred to as "MG2" in the drawings) 3. In order to transmit torques of the engine 1 and the first motor 2 to a pair of drive wheels 4, a power transmission mechanism 5 as a power split mechanism is arranged in the vehicle Ve. The power transmission mechanism 5 comprises two engagement devices such as a first clutch (also referred to as "Lo/c" in the drawings) 6, and a second clutch (also referred to as "Hi/c" in the drawings) 7. The vehicle Ve comprises a detector 8 that collects data relating to conditions of the vehicle Ve, and a controller 9 that controls the vehicle Ve.

For example, an internal combustion engine such as a gasoline engine and a diesel engine may be adopted as the engine 1. An output power of the engine 1 may be adjusted electrically, and the engine 1 may be started and stopped electrically according to need. For example, given that the gasoline engine is adopted as the engine 1, an opening degree of a throttle valve, an amount of fuel supply or fuel injection, a commencement and a termination of ignition, an ignition timing etc. may be controlled electrically. Otherwise, given that the diesel engine is adopted as the engine 1, an amount of fuel injection, an injection timing, an opening degree of a throttle valve of an Exhaust Gas Recirculation (EGR) system etc. may be controlled electrically.

Specifically, the first motor 2 is an electric rotary machine that translates an electric energy into a mechanical (or rotational) energy, and that translate the mechanical (or rotational) energy into the electric energy. The first motor 2 is disposed coaxially with the engine 1, and connected to the engine 1 and the drive wheels 4 through the power transmission mechanism 5. The first motor 2 serves not only as a motor to generate torque when driven by electricity suppled thereto, but also as a generator to generate electricity when driven by an output torque of the engine 1. That is, the first motor 2 is a motor-generator. For example, a permanent magnet type synchronous motor, and an induction motor may be adopted as the first motor 2. The first motor 2 is also connected to a battery through an inverter (neither of which are shown) so that the electricity generated by the first motor 2 can be accumulated in the battery. The first motor 2 may be operated as a motor to generate torque by supplying the electricity to the first motor 2 from the battery.

The second motor 3 is also an electric rotary machine that translates an electric energy into a mechanical (or rotational) energy, and that translate the mechanical (or rotational) energy into the electric energy. The second motor 3 is connected to the drive wheels 4 in a power transmittable manner. The second motor 3 serves not only as a motor to generate torque when driven by electricity suppled thereto, but also as a generator to generate electricity when driven by torque applied thereto from an external source. Thus, the second motor 3 is also a motor-generator. For example, a permanent magnet type synchronous motor, and an induction motor may also be adopted as the second motor 3. The second motor 3 is also connected to the battery through the inverter. Specifically, the second motor 3 may be operated as a motor to generate torque by supplying electricity to the second motor 3 from the battery, and may also be driven as a generator by torque transmitted thereto from the drive wheels 4. The electricity generated by the second motor 3 may also be accumulated in the battery. The first motor 2 and the second motor 3 are connected to each other through the inverter so that the electricity is exchanged therebetween. The second motor 3 may also be allowed to generate torque by directly supplying electricity generated by the first motor 2 to the second motor 3.

As described, the output torques of the engine 1 and the first motor 2 are delivered to the drive wheels 4 through the power transmission mechanism 5. The power transmission mechanism 5 comprises a first differential mechanism 10 and a second differential mechanism 11. For example, a single-pinion planetary gear unit may be adopted as the first differential mechanism 10 and the second differential mechanism 11, respectively. Specifically, the first differential mechanism 10 comprises a sun gear 10a, a ring gear 10b, a carrier 10c, and one set of pinion gears. Likewise, the second differential mechanism 11 comprises a sun gear 11a, a ring gear 11b, a carrier 11c, and one set of pinion gears.

Instead, a double-pinion planetary gear unit may also be adopted as the first differential mechanism 10 and the second differential mechanism 11, respectively. Further, the power transmission mechanism 5 may also be formed by arbitrarily combining any two of a Ravigneaux gear mechanism, the single-pinion planetary gear unit, and the double-pinion planetary gear unit.

In the power transmission mechanism 5, the ring gear 10b of the first differential mechanism 10 is connected to the sun gear 11a of the second differential mechanism 11. The carrier 10c of the first differential mechanism 10 is connected to an output shaft 1a of the engine 1, and an inverse rotation of the output shaft 1a in an opposite direction to a rotational direction of the engine 1 is prevented by a one-way clutch 12. To this end, the one-way clutch 12 is fixed to e.g., a housing (not shown) so that the one-way clutch 12 is brought into engagement to stop the inverse rotation of the output shaft 1a of the engine 1 when the torque is applied to the one-way clutch 12 in the reverse direction. The ring gear 11b of the second differential mechanism 11 is connected to the drive wheels 4 through an output gear 13, a differential gear unit 14 and so on. Alternatively, a brake may also be employed to selectively stop the inverse rotation of the output shaft 1a of the engine 1 instead of the one-way clutch 12.

The carrier 10c of the first differential mechanism 10 is selectively connected to the carrier 11c of the second differential mechanism 11 by engaging the first clutch 6 of the power transmission mechanism 5. To this end, for example, a wet-type multiple plate clutch and a dog clutch may be adopted as the first clutch 6. The ring gear 11b of the second differential mechanism 11 is selectively connected to the carrier 11c of the second differential mechanism 11 by engaging the second clutch 7 so as to rotate the rotary elements of the second differential mechanism 11 integrally. To this end, for example, a wet-type multiple plate clutch and a dog clutch may also be adopted as the second clutch 7.

The detector 8 collects various data and information relating to the vehicle Ve. For this purpose, the detector 8 comprises a power source, a microcomputer, an input/output interface and so on. Especially, in order to control the first clutch 6 and the second clutch 7, the detector 8 is adapted to detect a physical amount or physical quantity relating to a movement and an actuation of each of the first clutch 6 and the second clutch 7. To this end, the detector 8 further comprises at least one of: a stroke sensor 8a that detects a stroke position of a movable member of each of the first clutch 6 and the second clutch 7; an angle sensor 8b that detects a rotational angle of a rotary member of each of the first clutch 6 and the second clutch 7; and a pressure sensor 8c that detects a hydraulic pressure applied to an actuator (not shown) of each of the first clutch 6 and the second clutch 7. In addition, the detector 8 further comprises: a vehicle speed sensor (or a wheel speed sensor) 8d that detects a speed of the vehicle Ve; an engine speed sensor 8e that detects a speed of the engine 1; an accelerator sensor 8f that detects a position of an accelerator pedal (not shown); a motor speed sensor 8g (or a resolver) that detects a speed of each of the first motor 2 and the second motor 3; a shaft speed sensor 8h that detects a speed of the output shaft 1a of the engine 1; an output shaft speed sensor 8i that detects a speed of an output shaft of the output gear 13; a motor temperature sensor 8j that detects a temperature of each of the first motor 2 and the second motor 3; an SOC sensor 8k that detects a state of charge level of the battery; a battery temperature sensor 81 that detects a temperature of the battery; and an oil temperature sensor 8m that detects a temperature of cooling/lubricating oil. The detector 8 is electrically connected to the controller 9 so that the data collected by those sensors and calculation value calculated by the other devices of the detector 8 are transmitted to the controller 9 in the form of electric signal.

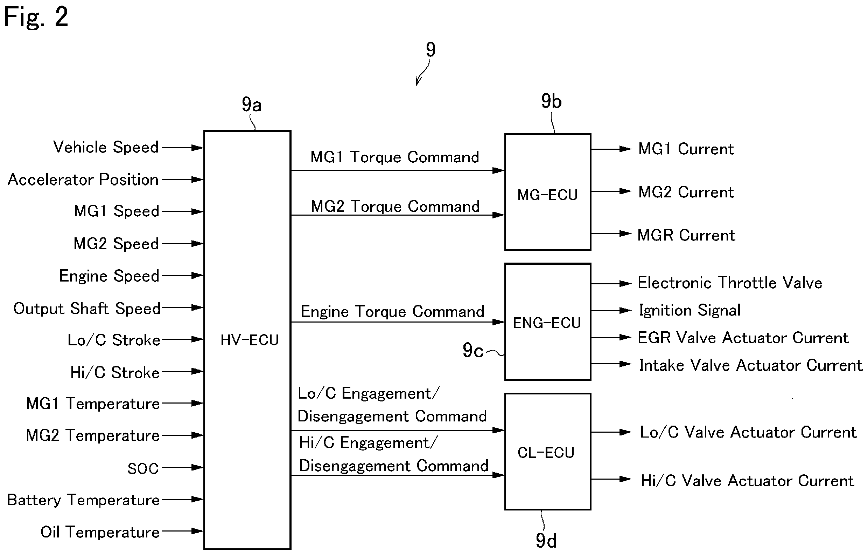

The controller 9 comprises a microcomputer as its main constituent, and for example, the engine 1, the first motor 2, the second motor 3, the first clutch 6, and the second clutch 7 are controlled by the controller 9. The controller 9 performs calculation using the incident data transmitted from the detector 8, and data and formulas or the like stored in advance. Calculation results are transmitted from the controller 9 to the engine 1, the first motor 2, the second motor 3, the first clutch 6, the second clutch 7 and so on in the form of command signal. Although only one controller 9 is depicted in the Fig. 1, a plurality of controllers may be arranged in the vehicle Ve to control the specific devices individually. For example, as shown in Fig. 2, controller 9 comprises: a hybrid controller (referred to as "HV-ECU" in Fig. 2) 9a that controls the vehicle Ve in an integrated manner based on an incident signal transmitted from the detector 8; a motor controller (referred to as "MG-ECU" in Fig. 2) 9b that controls the first motor 2 and the second motor 3; an engine controller (referred to as "ENG-ECU" in Fig. 2) 9c that controls the engine 1; and a clutch controller (referred to as "CL-ECU" in Fig. 2) 9d that controls the first clutch 6 and the second clutch 7.

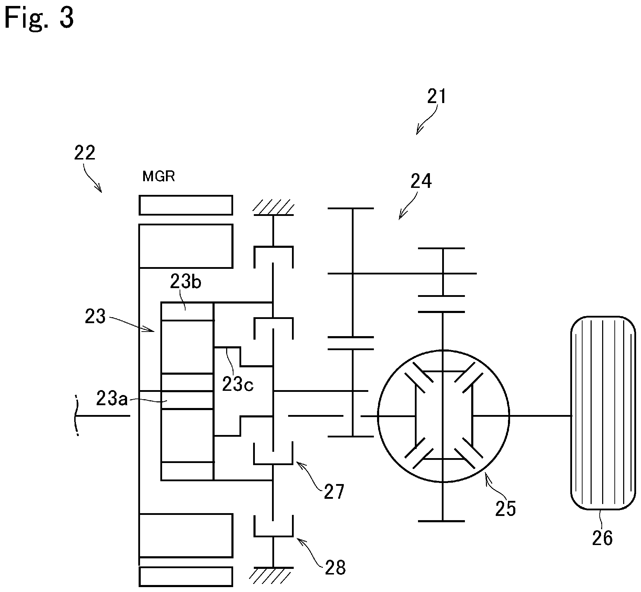

The gear train of the vehicle Ve to which the control system according to the exemplary embodiment of the present invention is applied should not be limited to the example shown in Fig. 1. For example, the control system according to the exemplary embodiment of the present invention may also be applied to a four-wheel layout vehicle in which the gear train shown in Fig. 1 is employed as a front drive unit, and a motor drive unit 21 shown in Fig. 3 is employed as a rear drive unit.

The motor drive unit 21 shown in Fig. 3 comprises a third motor (referred to as "MGR" in Fig. 3) 22 as a prime mover to drive a pair of rear wheels 26. Specifically, the third motor 22 is connected to the rear wheels 26 through a planetary gear unit 23, an output gear 24, a differential gear unit 25 and so on.

The third motor 22 serves not only as a motor to generate torque when driven by electricity suppled thereto, but also as a generator to generate electricity when driven by torque applied thereto from an external source. Thus, the third motor 22 is also a motor-generator. For example, a permanent magnet type synchronous motor, and an induction motor may also be adopted as the third motor 22. The third motor 22 is also connected to the battery through the inverter (neither of which are shown). Specifically, the third motor 22 may be operated as a motor to generate torque by supplying electricity to the third motor 22 from the battery, and may also be driven as a generator by torque transmitted thereto from the rear wheels 26.

For example, a single-pinion planetary gear unit may be adopted as the planetary gear unit 23. That is, the planetary gear unit 23 comprises a sun gear 23a, a ring gear 23b, a carrier 23c, and one set of pinion gears. The planetary gear unit 23 further comprises two engagement devices such as a third clutch 27 and a brake 28. In the planetary gear unit 23, the carrier 23c is selectively connected to the ring gear 23b by engaging the third clutch 27 so as to rotate the rotary elements of the planetary gear unit 23 integrally. To this end, for example, a wet-type multiple plate clutch and a dog clutch may also be adopted as the third clutch 27. A rotation of the ring gear 23b is selectively stopped by engaging the brake 28. For example, a wet-type multiple plate clutch and a dog clutch may also be adopted as the brake 28.

In the planetary gear unit 23, the sun gear 23a is connected to a rotor shaft 22a of the third motor 22, and the carrier 23c is connected to the rear wheels 26 through the output gear 24, the differential gear unit 25 and so on. As described, the rotation of the ring gear 23b is stopped by engaging the brake 28, and in this situation, the planetary gear unit 23 serves as a speed reducing mechanism to reduce a rotational speed of the carrier 23c with respect to a rotational speed of the sun gear 23a. Consequently, an output torque of the third motor 22 is delivered to the output gear 24 while reducing the speed of the rotor shaft 22a. In other words, the output torque of the third motor 22 is delivered to the output gear 24 while being multiplied. As also described, the rotary elements of the planetary gear unit 23 are rotated integrally by engaging the third clutch 27 so that the output torque of the third motor 22 is delivered to the output gear 24 while connecting the rotor shaft 22a directly to the output gear 24. In the motor drive unit 21, the third motor 22 may be disconnected from the rear wheels 26 by disengaging both of the third clutch 27 and the brake 28 thereby interrupting torque transmission between the third motor 22 and the rear wheels 26. Therefore, when propelling the vehicle Ve only by the output power of the front drive unit shown in Fig. 1, the third motor 22 may be prevented from rotated passively by disconnecting the third motor 22 from the rear wheels 26 so as to reduce a power loss.

The control system according to the exemplary embodiment of the present invention may also be applied to a four-wheel layout vehicle in which the gear train shown in Fig. 1 is employed as a rear drive unit, and a motor drive unit 21 shown in Fig. 3 is employed as a front drive unit. In addition, in the motor drive unit 21 shown in Fig. 3, a double-pinion planetary gear unit may also be adopted as the planetary gear unit 23 instead of the single-pinion planetary gear unit.

Further, the control system according to the exemplary embodiment of the present invention may also be applied to the hybrid vehicles described in JP-A-2018-103690, WO 2013/114594 A1, JP-A-2016-215973, JP-A-2017-7437 and so on. In addition, the control system according to the exemplary embodiment of the present invention may also be employed to control the brakes described in JP-A-2018-103690 and WO 2013/114594 A1.

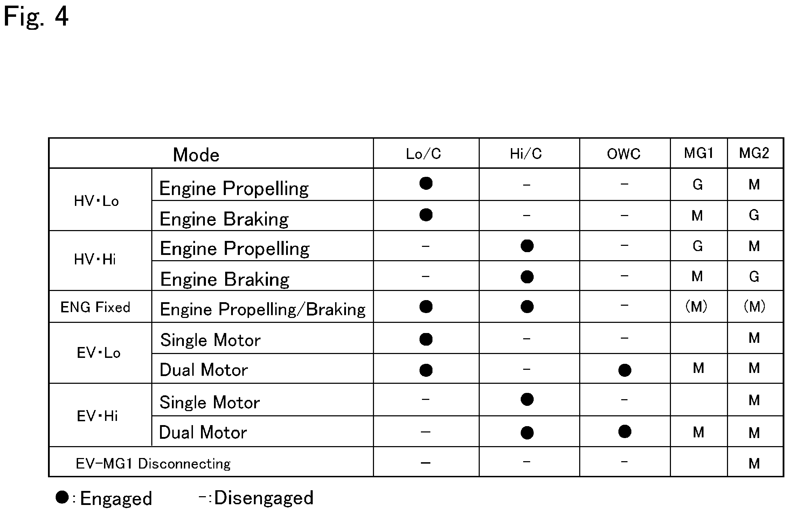

An operating mode of the vehicle Ve may be selected from a plurality of modes to change a torque transmitting condition through the power transmission mechanism 5, by manipulating the first clutch 6, the second clutch 7 the engine 1, the first motor 2, and the second motor 3 by the controller 9. Fig. 4 shows engagement states of the first clutch 6, the second clutch 7, and the one-way clutch 12, and operating conditions of the first motor 2 and the second motor 3 in each operating mode.

In a hybrid vehicle mode (to be abbreviated as the "HV mode" hereinafter), the engine 1 is activated to propel the vehicle Ve. According to the exemplary embodiment of the present invention, the HV mode may be selected from a HV-Low mode, a HV-High mode, and a fixed mode (referred to as "ENG Fixed" in Fig. 4). Specifically, the HV-Low mode is established by engaging only the first clutch 6. As indicated in Fig. 5A, in the HV-Low mode, the vehicle Ve is propelled in the forward direction by the output torque of the engine 1, by operating the first motor 2 as a generator while operating the second motor 3 as a motor. By contrast, in the HV-Low mode, an engine braking force is established by operating the first motor 2 as a motor while operating the second motor 3 as a generator.

The HV-High mode is established by engaging only the second clutch 7. As indicated in Fig. 5B, in the HV-High mode, the vehicle Ve is also propelled in the forward direction by the output torque of the engine 1, by operating the first motor 2 as a generator while operating the second motor 3 as a motor. By contrast, in the HV-High mode, an engine braking force is established by operating the first motor 2 as a motor while operating the second motor 3 as a generator.

The fixed mode is established by engaging both of the first clutch 6 and the second clutch 7. As indicated in Fig. 5C, in the fixed mode, the engine 1 and the first motor 2 are connected directly to the output gear 13 so that all of the rotary elements of the first differential mechanism 10 and the second differential mechanism 11 are rotated integrally. In the fixed mode, the vehicle Ve may be powered only by the output torque of the engine 1. Instead, In the fixed mode, the vehicle Ve may also be powered by the output torque of the engine 1 and the output torque of at least any one of the first motor 2 and the second motor 3.

As indicated in Fig. 5D, in the HV-Low mode, the vehicle Ve is propelled in the reverse direction by engaging only the first clutch 6 while rotating the first motor 2 in a reverse direction opposite to a rotational direction of the engine 1. As indicated in Fig. 5E, in the HV-High mode, the vehicle Ve is propelled in the reverse direction by engaging only the second clutch 7 while rotating the first motor 2 in the reverse direction.

Ratios of an output torque and a rotational speed of the first motor 2 to those of the engine 1, and ratios of an output torque and a rotational speed of the second motor 3 to those of the engine 1 are different in the HV-Low mode and in the HV-High mode. Specifically, the HV-Low mode is suitable to propel the vehicle Ve under high load condition, and the HV-High mode is suitable to propel the vehicle Ve at a high speed and under low load condition. Therefore, in order to improve an energy efficiency in the vehicle Ve, undesirable rise in the output torques and the rotational speeds of the first motor 2 and the second motor 3 can be prevented by selecting the HV-Low mode and the HV-High mode depending on a running condition such as a required drive force.

Specifically, the HV mode is shifted between the HV-Low mode and the HV-High mode via the fixed mode. As described, in the fixed mode, all of the rotary elements of the power transmission mechanism 5 are rotated integrally, and the first clutch 6 and the second clutch 7 are brought into a synchronous state respectively. Therefore, even if a dog clutch is adopted as the first clutch 6 and the second clutch 7 respectively, the first clutch 6 and the second clutch 7 may be engaged smoothly when the operating mode is shifted between the HV-Low mode and the HV-High mode.

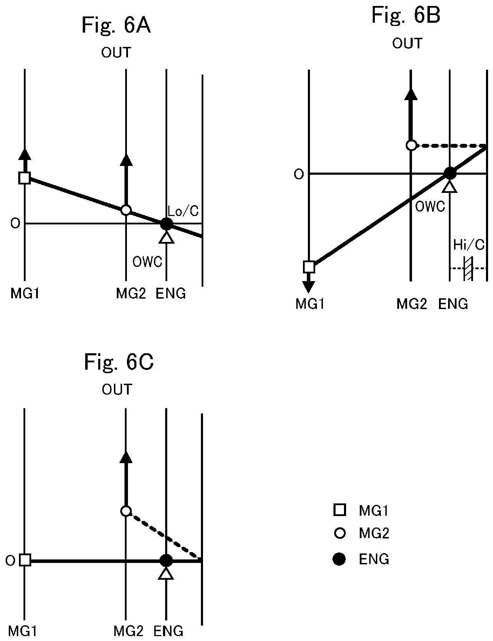

In an electric vehicle mode (to be abbreviated as the "EV mode" hereinafter), the vehicle Ve is propelled by an output torque of at least one of the first motor 2 and the second motor 3 while stopping the engine 1. According to the exemplary embodiment of the present invention, the EV mode may be selected from an EV-Low mode, an EV-High mode, and a first motor disconnecting mode (to be abbreviated as "MG1 disconnecting mode" hereinafter. Specifically, the EV-Low mode is established by engaging only the first clutch 6. In the EV-Low mode, the vehicle Ve is propelled in a single-motor mode by operating only the second motor 3 operated as a motor to generate an output torque to propel the vehicle Ve. As indicated in Fig. 6A, in the EV-Low mode, the vehicle Ve is propelled by the output torques of the first motor 2 and the second motor 3 in a dual-motor mode, by operating both of the first motor 2 and the second motor 3 as a motor while engaging the one-way clutch 12 to stop the rotation of the engine 1.

The EV-High mode is established by engaging only the second clutch 7. In the EV-High mode, the vehicle Ve is propelled in a single-motor mode by operating only the second motor 3 operated as a motor to generate an output torque to propel the vehicle Ve. As indicated in Fig. 6B, in the EV-High mode, the vehicle Ve is propelled by the output torques of the first motor 2 and the second motor 3 in a dual-motor mode, by operating both of the first motor 2 and the second motor 3 as a motor while engaging the one-way clutch 12 to stop the rotation of the engine 1.

The MG1 disconnecting mode is established by disengaging both of the first clutch 6 and the second clutch 7. As indicated in Fig. 6C, in the MG1 disconnecting mode, the vehicle Ve is propelled only by the second motor 3 in a single-motor mode while reducing rotational speeds of the engine 1 and the first motor 2 to zero. To this end, a torque of the first motor 2 is controlled by a feedback method in such a manner that the rotational speed of the first motor 2 is maintained to zero. However, if the rotational speed of the first motor 2 can be maintained to zero by e.g., a cogging torque, it is not necessary to control the torque of the first motor 2. Thus, in the MG1 disconnecting mode, the engine 1 and the first motor 2 are not rotated passively and hence a power loss can be reduced.

In the EV-Low mode, a gear ratio between the first motor 2 and the ring gear 11b as an output member is increased compared to that in the EV-High mode, and hence a maximum drive force is increased in the EV-Low mode. However, an upper limit speed of the first motor 2 is limited and hence an upper limit speed of the vehicle Ve is lowered in the EV-Low mode. Therefore, the EV-Low mode is selected when a large drive force is required or the required drive force is expected to be increased, and the operating mode is shifted from the EV-Low mode to the EV-High mode when the speed of the vehicle Ve is increased e.g., to the upper limit speed in the EV-Low mode. In the low load condition, the vehicle Ve is propelled only by the output torque of the second motor 3 in the single-motor mode without generating a drive torque by the first motor 2.

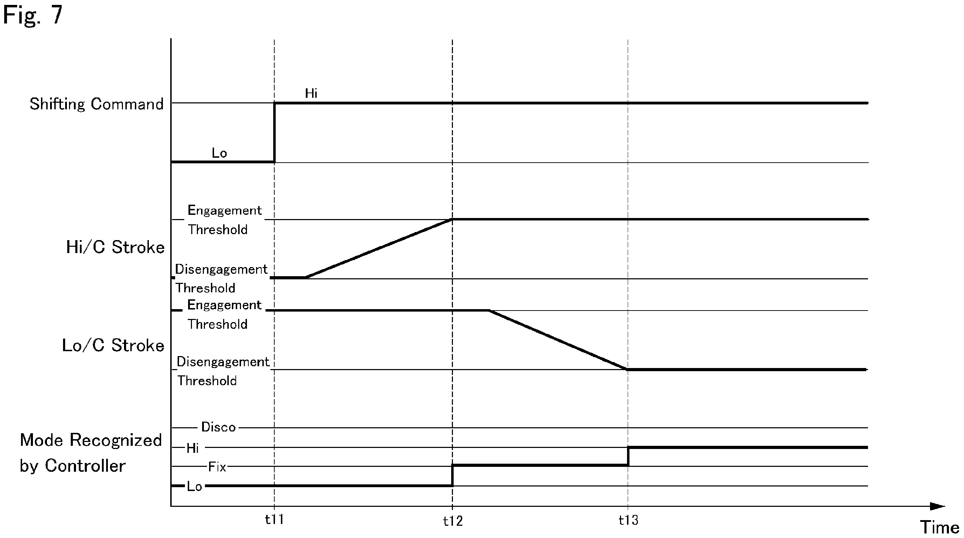

Turning to Fig. 7, there is shown one example of a shifting operation from the Low mode as a "first mode" of the embodiment to the High mode as a "second mode" of the embodiment. Specifically, the operating mode is shifted from the Low mode to the High mode by disengaging the first clutch 6 while engaging the second clutch 7, in any of the cases of shifting the operating mode from the HV-Low mode to the HV-High mode and the EV-Low mode to the EV-High mode. As described, each of the first clutch 6 and the second clutch 7 is an engagement device that is engaged and disengaged to change a torque transmitting condition of the power transmission mechanism 5. In the exemplary embodiment of the present invention, the first clutch 6 serves as a first engagement device, and the second clutch 7 serves as a second engagement device.

In the example shown in Fig. 7, the vehicle Ve is propelled in the Low mode before point t11. In this situation, the movable member of the first clutch 6 is positioned at an engagement position (indicated as "Engagement Threshold" in the drawings), and the movable member of the second clutch 7 is positioned at a disengagement position (indicated as "Disengagement Threshold" in the drawings). When a command signal to shift the operating mode from the Low mode to the High mode is transmitted at point t11, the movable member of the second clutch 7 starts moving toward the engagement position at a point after the response delay time from point t11. The second clutch 7 is engaged completely at point t12, and in this situation, both of the first clutch 6 and the second clutch 7 are engaged temporarily. Consequently, the operating mode is temporarily shifted from the Low mode to the fixed mode. The movable member of the first clutch 6 starts moving toward the disengagement position at a point after the response delay time from point t12, and the first clutch 6 is disengaged completely at point t13. Consequently, the operating mode is shifted from the fixed mode to the High mode.

During the situation shown in Fig. 7, the controller 9 recognizes the operating mode as the Low mode until point t12 based on determinations of engagement states of the first clutch 6 and the second clutch 7. According to the exemplary embodiment of the present invention, an engagement state of the engagement device such as the first clutch 6 and the second clutch 7 is determined based on a result of comparison between a physical amount of a movement or actuation of the engagement device and a predetermined threshold parameter. In the example shown in Fig. 7, engagement states of the first clutch 6 and the second clutch 7 are determined by detecting stroke positions of the movable members of the first clutch 6 and the second clutch 7, and comparing each detection value of the stroke position with a threshold position. For example, the controller 9 determines that the first clutch 6 is engaged completely when the movable member of the first clutch 6 reaches or passes an engagement threshold position, and that the first clutch 6 is disengaged completely when the movable member of the first clutch 6 reaches or passes a disengagement threshold position. Likewise, the controller 9 determines that the second clutch 7 is engaged completely when the movable member of the second clutch 7 reaches or passes the engagement threshold position, and that the second clutch 7 is disengaged completely when the movable member of the second clutch 7 reaches or passes the disengagement threshold position. Therefore, the controller 9 determines that both of the first clutch 6 and the second clutch 7 are engaged during the period from point t12 at which the completion of engagement of the second clutch 7 is determined to point t13 at which a completion of disengagement of the first clutch 6 is determined. That is, the controller 9 recognizes the operating mode as the fixed mode during a period from point t12 to point t13. After point t13, the controller 9 determines that the first clutch 6 is disengaged and the second clutch 7 is engaged, and consequently, the controller 9 recognizes the operating mode as the High mode from point t13.

Instead, engagement and disengagement of the engagement device may also be determined based on a rotational angle of the rotary member of the engagement device, or a hydraulic pressure applied to the actuator of the engagement device. In addition, the above-explained threshold to determine engagement and disengagement of the engagement device may not only be a fixed value but also be a variable which is varied in accordance with a temperature, a learning history and so on.

As described, the command signal to shift the operating mode may be changed during the shifting operation of the operating mode if the driver executes some kind of different operation during execution of the shifting operation, or if some kind of failure occurs during execution of the shifting operation. In those cases, actual engagement states of the first clutch 6 and the second clutch 7 being actuated based on the command signal thus changed may differ from the state recognized by the controller 9.

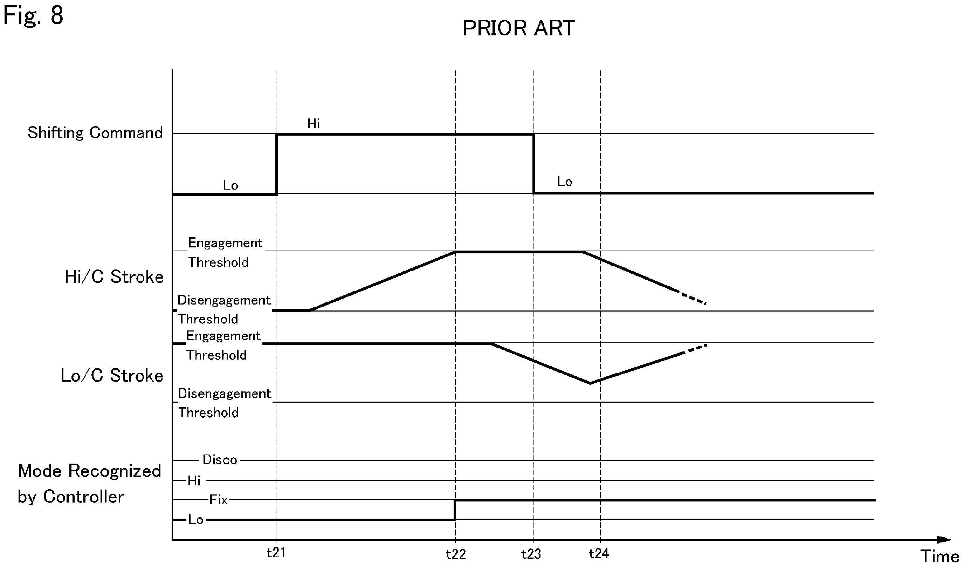

One example of the above-explained situation during mode shift operation executed by a conventional control system is shown in Fig. 8. In the example shown in Fig. 8, a command signal to shift the operating mode from the Low mode to the High mode is transmitted at point t21, and consequently the movable member of the second clutch 7 starts moving toward the engagement position at a point after the response delay time from point t21. The second clutch 7 is engaged completely at point t22, and in this situation, both of the first clutch 6 and the second clutch 7 are engaged temporarily. Consequently, the operating mode is temporarily shifted from the Low mode to the fixed mode. The movable member of the first clutch 6 starts moving toward the disengagement position at a point after the response delay time from point t22. Then, at point t23, the command signal to shift the operating mode from the Low mode to the High mode is cancelled and a command signal to shift the operating mode from the High mode to the Low mode is transmitted. Consequently, at a point after the response delay time from point t23, both of the movable members of the first clutch 6 and the second clutch 7 start returning toward the positions at which those movable members were positioned before the command signal to shift the operating mode from the Low mode to the High mode was transmitted. In other words, the movable member of the first clutch 6 starts returning toward the engagement position, and the movable member of the second clutch 7 starts returning toward the disengagement position slightly before point t24.

In the situation shown in Fig. 8, a stroke position of the movable member of the first clutch 6 has not yet moved and a stroke of the movable member of the second clutch 7 has not yet reached the engagement threshold before point t22. Therefore, a controller according to the prior art recognizes the operating mode as the Low mode until point t22. After point t22, the stroke of the movable member of the first clutch 6 is greater than the engagement threshold and the stroke of the movable member of the second clutch is zero or greater than the disengagement threshold. Therefore, the controller according to the prior art recognizes the operating mode as the fixed mode from point t22. Then, when the movable member of the second clutch 7 starts moving toward the disengagement position before point t24, both of the first clutch 6 and the second clutch 7 are disengaged, that is, not engaged completely. However, the controller according to the prior art still recognizes the operating mode as the fixed mode even after point t24 despite the fact that both of the first clutch 6 and the second clutch 7 are disengaged. That is, the controller according to the prior art cannot grasp the actual engagement states of the clutches accurately if the command signal to shift the operating mode is cancelled during execution of the mode shift operation. In this situation, for example, an engine speed may be raised unintentionally.

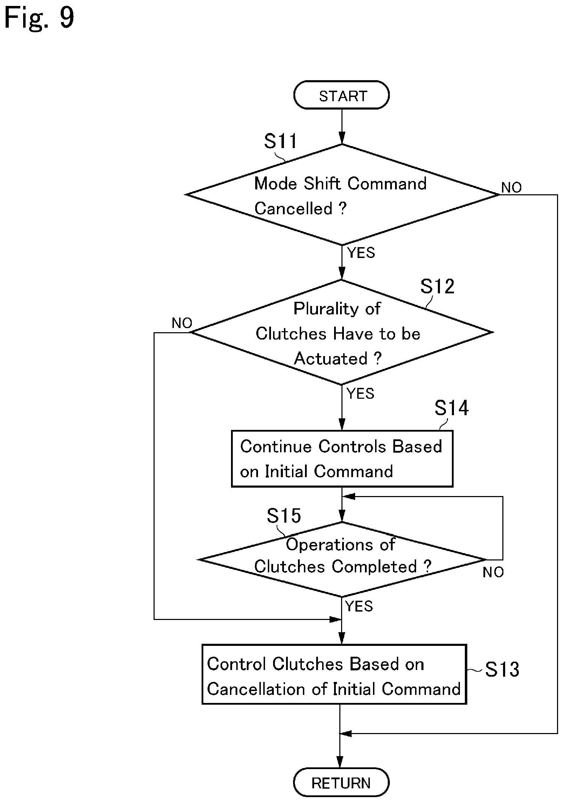

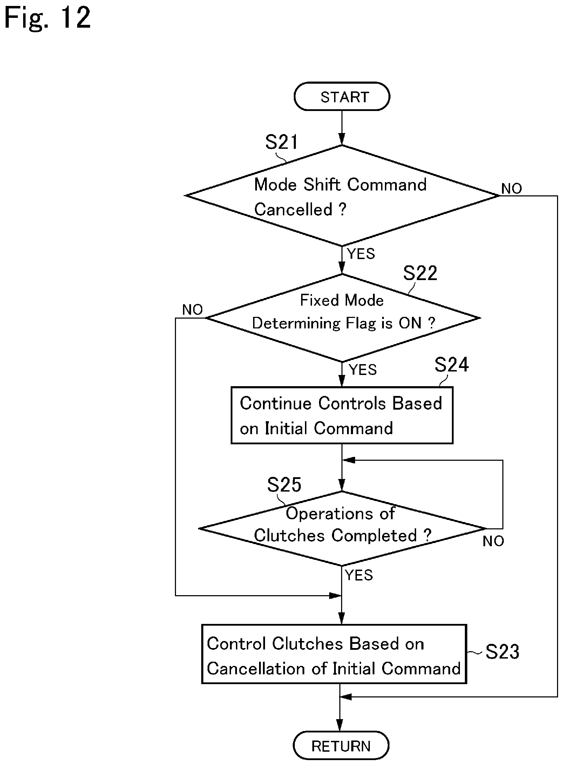

In order to avoid the above-explained disadvantage, the control system according to the exemplary embodiment of the present invention executes routines shown in Figs. 9 and 12.

Turning to Fig. 9, there is shown one example of the routine executed by the controller 9 to eliminate the inconsistency between the actual engagement states of the clutches 6, 7 and the engagement states of the clutches 6, 7 recognized by the controller 9. The routine shown in Fig. 9 is commenced in a situation where the command signal to shift the operating mode has been transmitted but an engaging operation and a disengaging operation of the first clutch 6 and the second clutch 7 based on the command signal have not yet been completed. At step S11, it is determined whether the command signal to shift the operating mode is cancelled. For example, given that the command signal to shift the operating mode from the Low mode to the High mode has been transmitted, it is determined at step S11 whether the initial command signal is cancelled and a command signal to shift the operating mode from the High mode to the Low mode is instead transmitted. In other words, given that the command signal to shift the operating mode from the Low mode to the High mode has been transmitted, it is determined at step S11 whether the command signal is changed to shift the operating mode from the High mode to the Low mode during execution of the disengaging operation of the first clutch 6 and the engaging operation of the second clutch 7 based on the initial command signal.

If the command signal to shift the operating mode is not cancelled so that the answer of step S11 is NO, the routine returns. By contrast, if the command signal to shift the operating mode is cancelled so that the answer of step S11 is YES, the routine progresses to step S12 to determine whether it is necessary to actuate a plurality of the engagement devices as a result of cancelling the initial command signal to shift the operating mode.

Specifically, it is determined at step S12 whether it is necessary to actuate both of the first clutch 6 and the second clutch 7 to establish the operating mode commanded by the new signal.

For example, if the initial command signal to shift the operating mode from the Low mode to the High mode is cancelled or changed to shift the operating mode to the Low mode again after shifting from the Low mode to the fixed mode as shown in Fig. 8, it is necessary to actuate both of the first clutch 6 and the second clutch 7 to return the operating mode to the Low mode. Specifically, the first clutch 6 being disengaged has to be engaged and the second clutch 7 which has been engaged has to be disengaged to return the operating mode to the Low mode. In this case, therefore, the answer of step S12 will be YES.

However, if the command signal to shift the operating mode from the Low mode to the High mode is cancelled or changed to return the operating mode to the Low mode again before shifting from the Low mode to the fixed mode in the situation shown in Fig. 8, only the second clutch 7 being engaged has to be disengaged to maintain the Low mode. In those cases, therefore, the answer of step S12 will be NO.

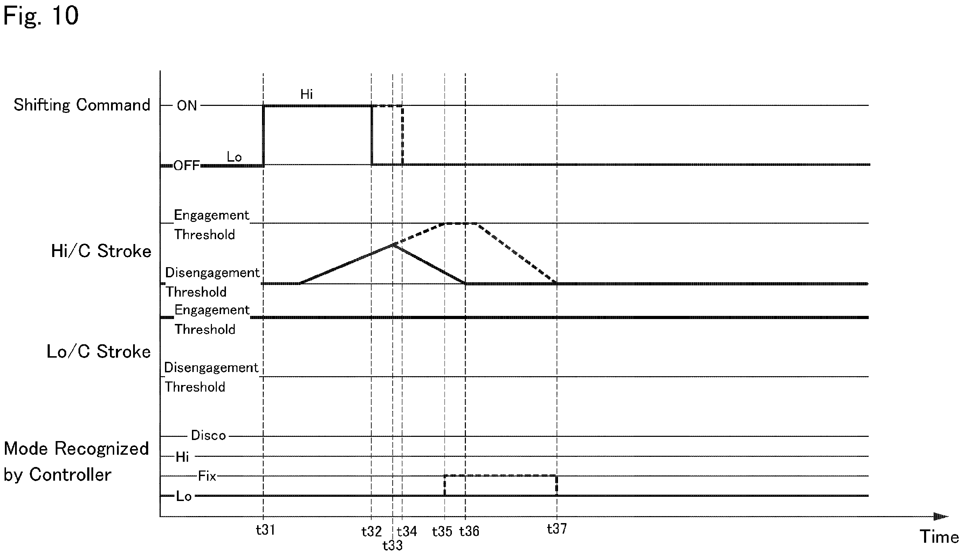

Such situation is shown in Fig. 10 in more detail. In the situation shown in Fig. 10, the command signal to shift the operating mode from the Low mode to the High mode is transmitted at point t31, and consequently the movable member of the second clutch 7 starts moving toward the engagement position at a point after the response delay time from point t31. In this situation, the second clutch 7 is expected to be engaged completely around point t35 to shift the operating mode to the fixed mode. In the example shown in Fig. 10, however, the command signal to shift the operating mode from the Low mode to the High mode is cancelled at point t23 before the operating mode is shifted from the Low mode to the fixed mode. In this situation, the movable member of the first clutch 6 maintained to the engagement position has not yet been actuated, and only the movable member of the second clutch 7 moving toward the engagement position is returned to the disengagement position at point t33 after the response delay time from point t32. Then, the second clutch 7 is disengaged completely so that the operating mode is returned to the Low mode at point t36.

Thus, according to the example shown in Fig. 10, the movable member of the second clutch 7 in the disengagement position is temporarily moved toward the engagement position, but returned to the disengagement position before reaching the engagement position, that is, before the operating mode is shifted from the Low mode to the fixed mode. In this situation, the first clutch 6 is maintained to be engaged, and hence the controller 9 recognizes the operating mode as the Low mode throughout the situation shown in Fig. 10. As indicated by the dashed line in Fig. 10, even if the command signal to shift the operating mode from the Low mode to the High mode is cancelled at point t34 which is after the above-mentioned point t32, the operating mode has not yet been shifted from the Low mode to the fixed mode. In this case, the movable member of the second clutch 7 moving toward the engagement position continuously moves toward the engagement position due to response delay even after point t34, and reaches the engagement position at point t35. Then, only the movable member of the second clutch 7 is moved toward the disengagement position after the response delay time, and reaches the disengagement position at point t37. Thus, the shifting operation from the Low mode to the High mode is cancelled before completion also in this case, and the operating mode is returned to the Low mode in response to such cancellation of the command signal. On the other hand, the first clutch 6 is maintained to be engaged throughout the situation shown in Fig. 10. Therefore, the controller 9 temporarily recognizes the operating mode as the fixed mode from point t35 to point t37, and recognizes the operating mode as the Low mode again from point t37. That is, the controller 9 does not recognize the operating mode as the High mode throughout the situation shown in Fig. 10.

Thus, in the case that the command signal to shift the operating mode from the Low mode to the High mode is cancelled or changed before the operating mode is shifted from the Low mode to the fixed mode, only the second clutch 7 is actuated in response to such cancellation of the initial command signal. That is, the first clutch 6 and the second clutch 7 will not be actuated simultaneously, and hence an interference between the first clutch 6 and the second clutch 7 will not be caused. In this case, therefore, an inconsistency between the actual engagement states of the clutches 6, 7 and the engagement states of the clutches 6, 7 recognized by the controller 9 will not occur.

Turning back to the situation shown in Fig. 8, even if the command signal to shift the operating mode from the Low mode to the High mode is cancelled immediately after point t22 while the first clutch 6 is still engaged due to response delay, the movable member of the first clutch 6 is moved temporarily toward the disengagement position and then moved toward the engagement position again. That is, both of the first clutch 6 and the second clutch 7 have to be actuated in accordance with the cancellation of the command signal if the command signal is cancelled after the operating mode has been shifted from the Low mode to the fixed mode. By contrast, in the case that the command signal is cancelled or changed before shifting from the Low mode to the fixed mode as shown in Fig. 10, only the second clutch 7 is actuated to return the operating mode to the Low mode. Thus, both of the first clutch 6 and the second clutch 7 have to be actuated in the case that the command signal to shift the operating mode from the Low mode to the High mode is cancelled or changed after the operating mode has been shifted from the Low mode to the fixed mode. At step S12 of the routine shown in Fig. 9, therefore, the necessity to actuate both of the first clutch 6 and the second clutch 7 is determined by determining whether the operating mode has been shifted from the Low mode to the fixed mode.

If the command signal to sift the operating mode from the Low mode to the High mode was cancelled before the operating mode is shifted from the Low mode to the fixed mode and hence it is not necessary to actuate both of the first clutch 6 and the second clutch 7, the answer of step S12 will be NO and the routine progresses to step S13.

At step S13, the first clutch 6 and the second clutch 7 are controlled based on the cancellation of the command signal. Before the command signal to shift the operating mode from the Low mode to the High mode was cancelled, the movable member of the second clutch 7 was moved toward the engagement position to shift the operating mode from the Low mode to the High mode. In this case, since the command signal was cancelled while the movable member of the second clutch 7 is moving toward the engagement position, that is, before the operating mode is shifted from the Low mode to the fixed mode, the movable member of the second clutch 7 is returned to the disengagement position. On the other hand, the first clutch 6 is maintained to be engaged throughout such engaging and disengaging operations of the second clutch 7.

Thus, in the case that the command signal to shift the operating mode from the Low mode to the High mode was cancelled before the operating mode is shifted from the Low mode to the fixed mode, only the movable member of the second clutch 7 is actuated at step S13 to be returned to the disengagement position in response to the cancellation of the command signal. Thereafter, the routine returns.

By contrast, if the command signal to shift the operating mode was cancelled or changed after the operating mode has been shifted from the Low mode to the fixed mode and hence it is necessary to actuate both of the first clutch 6 and the second clutch 7, the answer of step S12 will be YES and the routine progresses to step S14.

At step S14, the mode shifting operation based on the initial command signal to shift the operating mode from the Low mode to the High mode is continued. Specifically, the disengaging operation of the first clutch 6 is continued while maintaining the engagement of the second clutch 7 based on the initial command signal. That is, the control based on the cancellation of the initial command will not be executed immediately, and instead the control based on the cancelled initial command signal is continued. In other words, based on the fact that the operating mode has been shifted from the Low mode to the fixed mode, the initial command signal to shift the operating mode from the Low mode to the High mode is fixed at step S14.

Then, it is determined at step S15 whether both of the disengaging operation of the first clutch 6 and the engaging operation of the second clutch 7 continued at step S14 have been completed.

If both of the disengaging operation of the first clutch 6 and the engaging operation of the second clutch 7 have not yet been completed so that the answer of step S15 is NO, such determination at step S15 is repeated until the mode shifting operation based on the initial command signal fixed at step S14 is completed. By contrast, if both of the disengaging operation of the first clutch 6 and the engaging operation of the second clutch 7 have been completed so that the answer of step S15 is YES, the routine progresses to step S13.

In this case, at step S13, the first clutch 6 and the second clutch 7 are also controlled based on the cancellation of the command signal. Specifically, the first clutch 6 being disengaged is engaged again, and the second clutch 7 being engaged is disengaged again.

After controlling the first clutch 6 and the second clutch 7 based on the cancellation of the command signal at step S13, the routine returns.

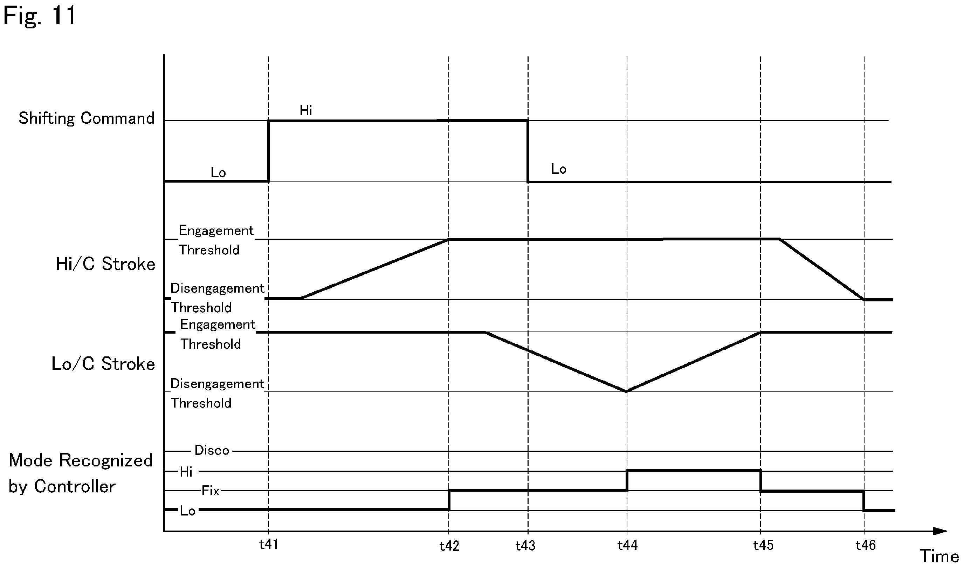

The actual situations of the first clutch 6 and the second clutch 7, and the operating mode recognized by the controller 9 during execution of the routine shown in Fig. 9 are shown in Fig. 11.

Specifically, Fig. 11 shows the situation in which the command signal to shift the operating mode from the Low mode to the High mode is transmitted, and the command signal is cancelled during execution of the shifting operation to return the operating mode to the Low mode again.

In the example shown in Fig. 11, the vehicle Ve is propelled in the Low mode before point t41. In this situation, the movable member of the first clutch 6 is positioned at the engagement position, and the movable member of the second clutch 7 is positioned at the disengagement position. That is, the first clutch 6 is engaged, and the second clutch 7 is disengaged before point t41. When the command signal to shift the operating mode from the Low mode to the High mode is transmitted at point t41, the movable member of the second clutch 7 starts moving toward the engagement position at a point after the response delay time from point t41. The second clutch 7 is engaged completely at point t42, and in this situation, both of the first clutch 6 and the second clutch 7 are engaged temporarily. Consequently, the operating mode is temporarily shifted from the Low mode to the fixed mode. The movable member of the first clutch 6 starts moving toward the disengagement position at a point after the response delay time from point t42.

After the second clutch 7 is engaged completely so that the operating mode is shifted from the Low mode to the fixed mode, the command signal to shift the operating mode from the Low mode to the High mode is cancelled at point t43. Consequently, the operating mode will be returned to the Low mode again. As described, according to the conventional art, moving directions of the clutches are changed immediately in response to such cancellation of the command signal. By contrast, according to the exemplary embodiment of the present invention, the controller 9 is configured to continue the disengaging operation of the first clutch 6 while maintaining the engagement of the second clutch 7, if the initial command signal to shift the operating mode from the Low mode to the High mode is cancelled after the operating mode has been shifted from the Low mode to the fixed mode.

In the situation shown in Fig. 10, the disengaging operation of the first clutch 6 based on the initial command signal to shift the operating mode from the Low mode to the High mode is continued until the first clutch 6 is disengaged completely at point t44. In this situation, the second clutch 7 is maintained to be engaged. Then, the first clutch 6 and the second clutch 7 are started to be actuated to return the operating mode to the initial mode based on the cancellation of the command signal. That is, the first clutch 6 is engaged again and the second clutch 7 is disengaged again so as to return the operating mode to the Low mode in response to the cancellation of the initial command signal, after the completion of the disengaging operation of the first clutch 6 and the engaging operation of the second clutch 7 based on the initial command signal.

Specifically, the movable member of the first clutch 6 which has reached the disengagement position at point t44 starts moving toward the engagement position from point t44, and reaches the engagement position at point t45. Then, the movable member of the second clutch 7 starts moving toward the disengagement position at a point after the response delay time from point t45, and reaches the disengagement position at point t46. As a result, the operating mode is returned to the Low mode again.

In the situation shown in Fig. 11, the controller 9 recognizes the operating mode as the Low mode until point t42. After determining the completion of the engaging operation of the second clutch 7 at point t42, the controller 9 determines that both of the first clutch 6 and the second clutch 7 are engaged. Therefore, the controller 9 starts recognizing the operating mode as the fixed mode from point t42 until the completion of the disengaging operation of the first clutch 6 is determined at point t44. In this situation, the first clutch 6 disengaged at point t44 based on the initial command signal to shift the operating mode from the Low mode to the High mode is immediately actuated to move the movable member toward the engagement position in response to the cancellation of the initial command signal. Consequently, the controller 9 starts recognizing the operating mode as the High mode during the period from point t44 to point t45 at which the movable member of the first clutch 6 reaches the engagement position. When the first clutch 6 is engaged completely at point t45, the controller 9 determines that both of the first clutch 6 and the second clutch 7 are engaged. That is, the controller 9 starts recognizing the operating mode as the fixed mode from point t45 until the second clutch 7 is disengaged completely at point t46. After determining the completion of the disengaging operation of the second clutch 7 at point t46, the controller 9 starts recognizing the operating mode as the Low mode. Thus, contrary to the case shown in Fig. 8, the controller 9 is allowed to grasp the actual engagement states of the first clutch 6 and the second clutch 7 accurately by executing the routine shown in Fig. 9, even if the initial command signal is cancelled after the completion of the engaging operation of the second clutch 7.

Turning to Fig. 12, there is shown another example of the routine to be executed by the controller 9. The routine shown in Fig. 12 is also commenced in the situation where the command signal to shift the operating mode has been transmitted, but the engaging operation and a disengaging operation of the first clutch 6 and the second clutch 7 based on the command signal have not yet been completed. At step S21, it is determined whether the command signal to shift the operating mode is cancelled. For example, given that the command signal to shift the operating mode from the Low mode to the High mode has been transmitted, it is determined at step S21 whether the initial command signal is cancelled and a command signal to shift the operating mode from the High mode to the Low mode is instead transmitted. In other words, given that the command signal to shift the operating mode from the Low mode to the High mode has been transmitted, it is determined at step S21 whether the command signal is changed to shift the operating mode from the High mode to the Low mode during execution of the disengaging operation of the first clutch 6 and the engaging operation of the second clutch 7.

If the command signal to shift the operating mode is not cancelled so that the answer of step S21 is NO, the routine returns. By contrast, if the command signal to shift the operating mode is cancelled so that the answer of step S21 is YES, the routine progresses to step S22 to determine whether a fixed mode determining flag is on.

Specifically, the fixed mode determining flag is a control flag that is turned on when both of the first clutch 6 and the second clutch 7 are engaged to establish the fixed mode, and turned off when at least any one of the first clutch 6 and the second clutch 7 is/are disengaged to establish the operating mode other than the fixed mode. For example, the fixed mode determining flag is turned on when the operating mode is shifted from the Low mode or the High mode to the fixed mode, and turned off when the operating mode is shifted from the fixed mode to the Low mode or the High mode.

If the fixed mode determining flag is off, that is, if the command signal to shift the operating mode from the Low mode to the High mode was cancelled before shifting the operating mode from the Low mode to the fixed mode so that the answer of step S22 is NO, the routine progresses to step S23.

At step S23, the first clutch 6 and the second clutch 7 are controlled based on the cancellation of the command signal. Before the command signal to shift the operating mode from the Low mode to the High mode was cancelled, the movable member of the second clutch 7 was moved toward the engagement position to shift the operating mode from the Low mode to the High mode. In this case, since the command signal was cancelled while the movable member of the second clutch 7 is being moved toward the engagement position, the movable member of the second clutch 7 is returned to the disengagement position. On the other hand, the first clutch 6 is maintained to be engaged throughout such engaging and disengaging operations of the second clutch 7.

Thus, in the case that the command signal to shift the operating mode from the Low mode to the High mode was cancelled before the operating mode is shifted from the Low mode to the fixed mode, only the movable member of the second clutch 7 is actuated at step S23 to be returned to the disengagement position in response to the cancellation of the command signal. Thereafter, the routine returns.

By contrast, if the fixed mode determining flag is on, that is, if the command signal to shift the operating mode from the Low mode to the High mode was cancelled after the operating mode has been shifted from the Low mode to the fixed mode so that the answer of step S22 is YES, the routine progresses to step S24.

At step S24, the mode shifting operation based on the initial command signal is continued. Specifically, the disengaging operation of the first clutch 6 is continued while maintaining the engagement of the second clutch 7 are based on the initial command signal. That is, the control based on the cancellation of the initial command will not be executed immediately, and instead the control based on the cancelled initial command signal is continued. In other words, based on the fact that the operating mode has been shifted from the Low mode to the fixed mode, the initial command signal to shift the operating mode from the Low mode to the High mode is fixed at step S24.

Then, it is determined at step S25 whether both of the disengaging operation of the first clutch 6 and the engaging operation of the second clutch 7 continued at step S24 have been completed.

If both of the disengaging operation of the first clutch 6 and the engaging operation of the second clutch 7 have not yet been completed so that the answer of step S25 is NO, such determination at step S25 is repeated until the mode shifting operation based on the initial command signal is completed. By contrast, if both of the disengaging operation of the first clutch 6 and the engaging operation of the second clutch 7 have been completed so that the answer of step S25 is YES, the routine progresses to step S23. As a result of the fact that the operating mode has been shifted from the fixed mode to the High mode based on the initial command to shift the operating mode from the Low mode to the High mode, the fixed mode determining flag is turned off.

In this case, at step S23, the first clutch 6 and the second clutch 7 are also controlled based on the cancellation of the command signal. Specifically, the first clutch 6 being disengaged is engaged again, and the second clutch 7 being engaged is disengaged again. Consequently, the operating mode is shifted from the High mode to the Low mode via the fixed mode. That is, during execution of the engaging operation of the first clutch 6 and the disengaging operation of the second clutch 7 at step S23, the fixed mode determining flag is temporarily turned on, and turned off when the operating mode is shifted from the fixed mode to the High mode.

After controlling the first clutch 6 and the second clutch 7 based on the cancellation of the command signal at step S23, the routine returns.

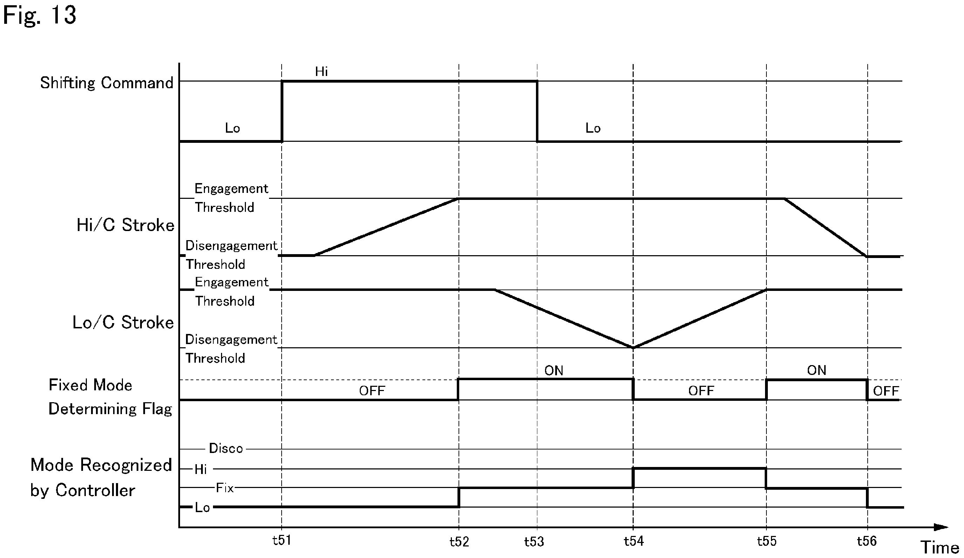

The actual situations of the first clutch 6 and the second clutch 7, and the operating mode recognized by the controller 9 during execution of the routine shown in Fig. 12 are shown in Fig. 13.

Specifically, Fig. 13 shows the situation in which the command signal to shift the operating mode from the Low mode to the High mode is transmitted, and the command signal is cancelled during execution of the shifting operation to return the operating mode to the Low mode again.

In the example shown in Fig. 13, the vehicle Ve is propelled in the Low mode before point t51. In this situation, the movable member of the first clutch 6 is positioned at the engagement position, and the movable member of the second clutch 7 is positioned at the disengagement position. That is, the first clutch 6 is engaged, and the second clutch 7 is disengaged before point t51. When the command signal to shift the operating mode from the Low mode to the High mode is transmitted at point t51, the movable member of the second clutch 7 starts moving toward the engagement position at a point after the response delay time from point t51. The second clutch 7 is engaged completely at point t52, and in this situation, both of the first clutch 6 and the second clutch 7 are engaged temporarily. Consequently, at point t52, the operating mode is temporarily shifted from the Low mode to the fixed mode, and the fixed mode determining flag is turned on. Then, the movable member of the first clutch 6 starts moving toward the disengagement position at a point after the response delay time from point t52.

After the second clutch 7 is engaged completely so that the operating mode is shifted from the Low mode to the fixed mode, the command signal to shift the operating mode from the Low mode to the High mode is cancelled at point t53. Consequently, the operating mode will be returned to the Low mode again. As described, according to the conventional art, moving directions of the clutches are changed immediately in response to such cancellation of the command signal. By contrast, according to the exemplary embodiment of the present invention, the controller 9 is configured to continue the disengaging operation of the first clutch 6 while maintaining the engagement of the second clutch 7, even if the command signal to shift the operating mode from the Low mode to the High mode is cancelled after the operating mode has been shifted from the Low mode to the fixed mode.

The disengaging operation of the first clutch 6 based on the initial command signal to shift the operating mode from the Low mode to the High mode is continued as long as the fixed mode determining flag is on, that is, until the first clutch 6 is disengaged completely at point t54. Then, the first clutch 6 and the second clutch 7 are started to be actuated to return the operating mode to the initial mode based on the cancellation of the command signal. That is, the first clutch 6 is engaged again and the second clutch 7 is disengaged again so as to return the operating mode to the Low mode based on the cancellation of the initial command signal, after the disengaging operation of the first clutch 6 and the engaging operation of the second clutch 7 based on the initial command signal have been completed.

Specifically, the movable member of the first clutch 6 reaches the disengagement position at point t54. Consequently, the operating mode is shifted from the fixed mode to the High mode based on the initial command signal, and the fixed mode determining flag is turned off. The movable member of the first clutch 6 starts moving toward the engagement position from point t54, and reaches the engagement position at point t55. Consequently, the operating mode is shifted from the High mode to the fixed mode again, and the fixed mode determining flag is turned on again at point t55. Then, the movable member of the second clutch 7 starts moving toward the disengagement position at a point after the response delay time from point t55, and reaches the disengagement position at point t56. As a result, the operating mode is shifted from the fixed mode to the Low mode again, and the fixed mode determining flag is turned off.

In the situation shown in Fig. 13, the controller 9 recognizes the operating mode as the Low mode until point t52. When the second clutch 7 is engaged completely at point t52, the controller 9 determines that both of the first clutch 6 and the second clutch 7 are engaged. That is, the controller 9 starts recognizing the operating mode as the fixed mode from point t52 until the first clutch 6 is disengaged completely at point t54. In this situation, the first clutch 6 disengaged at point t54 based on the initial command signal to shift the operating mode from the Low mode to the High mode is immediately actuated to move the movable member thereof toward the engagement position in response to the cancellation of the initial command signal. Consequently, the controller 9 starts recognizing the operating mode as the High mode during the period from point t54 to point t55 in which the movable member of the first clutch 6 moves toward the engagement position. When the first clutch 6 is engaged completely at point t55, the controller 9 determines that both of the first clutch 6 and the second clutch 7 are engaged. That is, the controller 9 starts recognizing the operating mode as the fixed mode from point t55 until the second clutch 7 is disengaged completely at point t56. When the second clutch 7 is disengaged completely at point t56, the controller 9 starts recognizing the operating mode as the Low mode. Thus, contrary to the case shown in Fig. 8, the controller 9 is also allowed to grasp the actual engagement states of the first clutch 6 and the second clutch 7 accurately by executing the routine shown in Fig. 12.

As described, in the case of shifting the operating mode from the Low mode to the High mode, the control system according to the exemplary embodiment of the present invention fixes the initial command signal to shift the operating mode from the Low mode to the fixed mode after the operating mode has been shifted from the Low mode to the fixed mode. Specifically, when both of the first clutch 6 and the second clutch 7 are engaged so that the fixed mode is established, the disengaging operation of the first clutch 6 is continued while maintaining the engagement of the second clutch 7. In other words, operations of the clutches 6 and 7 other than the disengaging operation of the first clutch 6 based on the initial command signal to shift the operating mode from the Low mode to the High mode are restricted after the operating mode has been shifted from the Low mode to the fixed mode. Therefore, the engaging and disengaging operations of the first clutch 6 and the second clutch 7 will not be executed simultaneously contrary to the initial command signal. For this reason, even if the initial command signal to shift the operating mode is cancelled thereby changing actuating directions of the first clutch 6 and the second clutch 7 during execution of the engagement and disengagement operations, inconsistency between the actual engagement states of those clutches and the engagement states of those clutches recognized by the controller 9 can be resolved. According to the exemplary embodiment of the present invention, therefore, the vehicle Ve can be controlled properly in a stable manner based on the actual engagement states of the first clutch 6 and the second clutch 7.

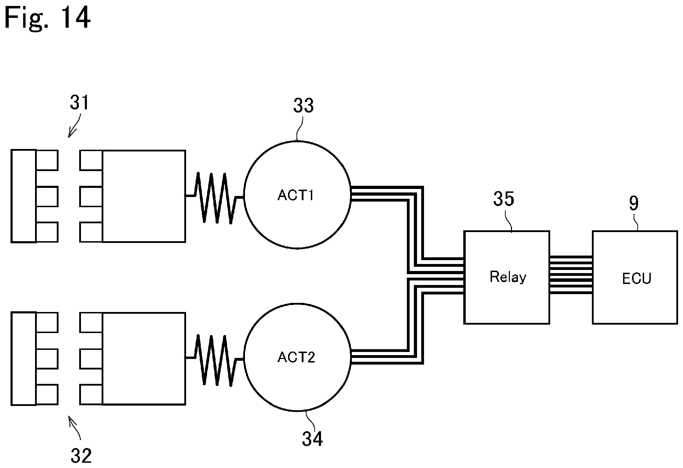

Turning to Fig. 14, there is shown another example of the vehicle Ve in which the clutches are actuated using e.g., by a relay. According to the example shown in Fig. 14, the vehicle Ve is provided with a first clutch 31 corresponding to the first clutch 6, and a second clutch 32 corresponding to the second clutch 7. The first clutch 31 and the second clutch 32 are also actuated to shift the operating mode of the vehicle Ve. The first clutch 31 comprises a first actuator 33 that engages and disengages the first clutch 31, and the second clutch 32 comprises a second actuator 34 that engages and disengages the second clutch 32. In order to switch engagement states of the first clutch 31 and the second clutch 32, the vehicle Ve is further provided with a relay 35. The first clutch 31 and the second clutch 32 are electrically connected with the relay 35 respectively, and the relay 35 is electrically connected with the controller 9.

A conventional relay may be adopted as the relay 35, and the relay 35 selectively activates an electric circuit connected to an output side of the relay 35 in accordance with a control signal transmitted from the controller 9. According to the example shown in Fig. 14, specifically, the relay 35 selectively energizes one of the first actuator 33 and the second actuator 34 in accordance with the control signal transmitted from the controller 9. For example, when any one of first actuator 33 and the second actuator 34 is energized though the relay 35, current supply to the other one of first actuator 33 and the second actuator 34 is interrupted. That is, one of first actuator 33 and the second actuator 34 is always allowed to be actuated, and the other one of first actuator 33 and the second actuator 34 is prevented to be actuated simultaneously. Optionally, those clutches may also be actuated simultaneously by arranging a plurality of relays, or by arranging another electrical circuit detouring the relay 35.

Thus, according to another example of the vehicle Ve, engagement states of the first clutch 31 and the second clutch 32 can be controlled easily without actuating those clutches simultaneously, by selectively supply current to the first clutch 31 and the second clutch 32 by the relay 35. According to another example of the vehicle Ve, therefore, the operating mode of the vehicle Ve can be shifted easily to change a torque transmitting condition of the power transmission mechanism 5 while preventing a control interference.

## Claims

1. A control system for a hybrid vehicle (Ve) comprising:
a prime mover (1, 2, 3) including an engine (1) and a plurality of electric rotary machines (2, 3);
a power transmission mechanism (5) comprising at least a first engagement device (6, 31) and a second engagement device (7, 32), that are selectively engaged to transmit torque between the prime mover (1, 2, 3) and at least one pair of drive wheels (4, 26), and that are manipulated to change a torque transmitting condition; and
a controller (9) that controls the engagement devices (6, 7, 31, 32),
wherein an operating mode of the hybrid vehicle (Ve) is shifted to change the torque transmitting condition among at least
a first mode that is established by engaging the first engagement device (6, 31) while disengaging the second engagement device (7, 32),
a second mode that is established by engaging the second engagement device (7, 32) while disengaging the first engagement device (6, 31), and
a fixed mode that is established by engaging both of the first engagement device (6, 31) and the second engagement device (7, 32), and
wherein the controller (9) is configured to
shift the operating mode from the first mode to the second mode based on a command signal by shifting from the first mode to the fixed mode by engaging the second engagement device (7, 32) while maintaining engagement of the first engagement device (6, 31), and thereafter shifting from the fixed mode to second mode by disengaging the first engagement device (6, 31) while maintaining engagement of the second engagement device (7, 32),
fix the command signal to shift the operating mode from the first mode to the second mode to complete the shifting operation from the first mode to the second mode based on the command signal, after the operating mode has been shifted from the first mode to the fixed mode, and
**characterized in that** the controller (9) is configured to actuate the first engagement device (6, 31) and the second engagement device (7, 32) so as to shift the operating mode to the mode other than the second mode after completion of the disengaging operation of the first engagement device (6, 31) to shift the operating mode to the second mode, if the command signal to shift the operating mode from the first mode to the second mode is cancelled or changed to shift the operating mode to the mode other than the second mode during execution of the shifting operation from the first mode to the second mode, after the operating mode has been shifted from the first mode to the fixed mode but before completion of the disengaging operation of the first engagement device (6, 31).

2. The control system for the hybrid vehicle (Ve) as claimed in claim 1, further comprising:
a detector (8) that detects a physical amount relating to a stroke of each of the first engagement device (6, 31) and the second engagement device (7, 32),
wherein the controller (9) is further configured to determine the completion of the engaging/ disengaging operation of each of the first engagement device (6, 31) and the second engagement device (7, 32) based on a result of comparison between the physical amount relating to a stroke of the each of the first engagement device (6, 31) and the second engagement device (7, 32) and a predetermined threshold.

3. The control system for the hybrid vehicle (Ve) as claimed in any one of claim 1 to 2, further comprising:
an actuator (33, 34) that is actuated to actuate the engagement devices (6, 7, 31, 32) when energized; and
a relay (35) that selectively interrupt current supply to the actuator (33, 34) in accordance with a control signal,
wherein the controller (9) is further configured to engage or disengage the engagement devices (6, 7, 31, 32) by controlling the relay (35).

4. The control system for the vehicle (Ve) as claimed in any one of claims 1 to 3, wherein each of the first engagement device (6, 31) and the second engagement device (7, 32) includes a dog clutch.

## Patentansprüche

1. Steuerungssystem für ein Hybridfahrzeug (Ve), umfassend:
einen Primärantrieb (1, 2, 3), der einen Motor (1) und mehrere drehende elektrische Maschinen (2, 3) beinhaltet,
einen Kraftübertragungsmechanismus (5), der zumindest eine erste Eingriffsvorrichtung (6, 31) und eine zweite Eingriffsvorrichtung (7, 32) umfasst, die selektiv in Eingriff gebracht werden, um Drehmoment zwischen dem Primärantrieb (1, 2, 3) und zumindest einem Paar von Antriebsrädern (4, 26) zu übertragen, und die manipuliert werden, um einen Drehmomentübertragungszustand zu verändern, und
ein Steuergerät (9), das die Eingriffsvorrichtungen (6, 7, 31, 32) steuert,
wobei ein Betriebsmodus des Hybridfahrzeugs (Ve) geschaltet wird, um den Drehmomentübertragungszustand zumindest zwischen
einem ersten Modus, der festgelegt wird, indem die erste Eingriffsvorrichtung (6, 31) in Eingriff gebracht wird, während die zweite Eingriffsvorrichtung (7, 32) außer Eingriff gebracht wird,
einem zweiten Modus, der festgelegt wird, indem die zweite Eingriffsvorrichtung (7, 32) in Eingriff gebracht wird, während die erste Eingriffsvorrichtung (6, 31) außer Eingriff gebracht wird, und
einem fixierten Modus, der festgelegt wird, indem die erste Eingriffsvorrichtung (6, 31) und die zweite Eingriffsvorrichtung (7, 32) beide in Eingriff gebracht werden,
zu verändern, und
wobei das Steuergerät (9) dazu ausgestaltet ist,
den Betriebsmodus auf Grundlage eines Befehlssignals von dem ersten Modus in den zweiten Modus zu schalten durch Schalten von dem ersten Modus in den fixierten Modus, indem die zweite Eingriffsvorrichtung (7, 32) in Eingriff gebracht wird, während der Eingriff der ersten Eingriffsvorrichtung (6, 31) aufrechterhalten wird, und danach Schalten von dem fixierten Modus in den zweiten Modus, indem die erste Eingriffsvorrichtung (6, 31) außer Eingriff gebracht wird, während der Eingriff der zweiten Eingriffsvorrichtung (7, 32) aufrechterhalten wird,
das Befehlssignal festzulegen, um den Betriebsmodus von dem ersten Modus in den zweiten Modus zu schalten, um den Schaltvorgang von dem ersten Modus in den zweiten Modus auf Grundlage des Befehlssignals abzuschließen, nachdem der Betriebsmodus von dem ersten Modus in den fixierten Modus geschaltet wurde, und
**dadurch gekennzeichnet, dass** das Steuergerät (9) dazu ausgestaltet ist, die erste Eingriffsvorrichtung (6, 31) und die zweite Eingriffsvorrichtung (7, 32) zu betätigen, um den Betriebsmodus in den anderen Modus als den zweiten Modus zu schalten nach Abschluss des Vorgangs des Außereingriffbringes der ersten Eingriffsvorrichtung (6, 31), den Betriebsmodus in den zweiten Modus zu schalten, wenn das Befehlssignal, um den Betriebsmodus von dem ersten Modus in den zweiten Modus zu schalten, aufgehoben oder verändert wird, um den Betriebsmodus in den anderen Modus als den zweiten Modus während der Ausführung des Schaltvorgangs von dem ersten Modus in den zweiten Modus zu schalten, nachdem der Betriebsmodus von dem ersten Modus in den fixierten Modus geschaltet wurde, jedoch vor Abschluss des Vorgangs des Außereingriffbringens der ersten Eingriffsvorrichtung (6, 31).

2. Steuerungssystem für das Hybridfahrzeug (Ve) nach Anspruch 1, ferner umfassend:
einen Detektor (8), der eine physikalische Größe in Verbindung mit einem Arbeitsweg von jeder von der ersten Eingriffsvorrichtung (6, 31) und der zweiten Eingriffsvorrichtung (7, 32) detektiert,
wobei das Steuergerät (9) ferner dazu ausgestaltet ist, den Abschluss des Vorgangs des Ineingriffbringens/Außereingriffbringens von jeder von der ersten Eingriffsvorrichtung (6, 31) und der zweiten Eingriffsvorrichtung (7, 32) auf Grundlage eines Ergebnisses des Vergleichs zwischen der physikalischen Größe in Verbindung mit einem Arbeitsweg von jeder von der ersten Eingriffsvorrichtung (6, 31) und der zweiten Eingriffsvorrichtung (7, 32) und einer vorbestimmten Schwelle zu bestimmen.

3. Steuerungssystem für das Hybridfahrzeug (Ve) nach Anspruch 1 oder 2, ferner umfassend:
ein Stellglied (33, 34), das betätigt wird, um die Eingriffsvorrichtungen (6, 7, 31, 32) zu betätigen, wenn es bestromt wird, und
ein Relais (35), das die Stromzufuhr zu dem Stellglied (33, 34) selektiv in Übereinstimmung mit einem Steuersignal unterbricht,
wobei das Steuergerät (9) ferner dazu ausgestaltet ist, die Eingriffsvorrichtungen (6, 7, 31, 32) durch Steuern des Relais (35) in oder außer Eingriff zu bringen.

4. Steuerungssystem für das Fahrzeug (Ve) nach einem der Ansprüche 1 bis 3, wobei jede von der ersten Eingriffsvorrichtung (6, 31) und der zweiten Eingriffsvorrichtung (7, 32) eine Klauenkupplung beinhaltet.

## Revendications

1. Système de commande pour un véhicule hybride (Ve) comprenant :
un groupe motopropulseur (1, 2, 3) comprenant un moteur thermique (1) et une pluralité de machines électriques tournantes (2, 3) ;
un mécanisme de transmission de puissance (5) comprenant au moins un premier dispositif d'engagement (6, 31) et un deuxième dispositif d'engagement (7, 32), qui sont engagés de manière sélective pour transmettre du couple entre le groupe motopropulseur (1, 2, 3) et au moins une paire de roues motrices (4, 26), et qui sont manœuvrés pour changer une condition de transmission de couple ; et
un circuit de commande (9) qui commande les dispositifs d'engagement (6, 7, 31, 32),
un mode de fonctionnement du véhicule hybride (Ve) étant commuté pour changer la condition de transmission de couple parmi au moins
un premier mode qui est établi en engageant le premier dispositif d'engagement (6, 31) tout en désengageant le deuxième dispositif d'engagement (7, 32),
un deuxième mode qui est établi en engageant le deuxième dispositif d'engagement (7, 32) tout en désengageant le premier dispositif d'engagement (6, 31), et
un mode fixe qui est établi en engageant à la fois le premier dispositif d'engagement (6, 31) et le deuxième dispositif d'engagement (7, 32), et
le circuit de commande (9) étant configuré pour
commuter le mode de fonctionnement du premier mode vers le deuxième mode sur la base d'un signal de commande par commutation du premier mode vers le mode fixe en engageant le deuxième dispositif d'engagement (7, 32) tout en maintenant un engagement du premier dispositif d'engagement (6, 31), et commutation ensuite du mode fixe vers le deuxième mode en désengageant le premier dispositif d'engagement (6, 31) tout en maintenant un engagement du deuxième dispositif d'engagement (7, 32),
fixer le signal de commande pour commuter le mode de fonctionnement du premier mode vers le deuxième mode pour terminer l'opération de commutation du premier mode vers le deuxième mode sur la base du signal de commande, une fois que le mode de fonctionnement a été commuté du premier mode vers le mode fixe, et
**caractérisé en ce que** le circuit de commande (9) est configuré pour actionner le premier dispositif d'engagement (6, 31) et le deuxième dispositif d'engagement (7, 32) de façon à commuter le mode de fonctionnement vers le mode autre que le deuxième mode après achèvement de l'opération de désengagement du premier dispositif d'engagement (6, 31) pour commuter le mode de fonctionnement vers le deuxième mode, si le signal de commande pour commuter le mode de fonctionnement du premier mode vers le deuxième mode est annulé ou changé pour commuter le mode de fonctionnement vers le mode autre que le deuxième mode pendant une exécution de l'opération de commutation du premier mode vers le deuxième mode, une fois que le mode de fonctionnement a été commuté du premier mode vers le mode fixe mais avant l'achèvement de l'opération de désengagement du premier dispositif d'engagement (6, 31).

2. Système de commande pour le véhicule hybride (Ve) selon la revendication 1, comprenant en outre :
un détecteur (8) qui détecte une quantité physique se rapportant à une course de chacun du premier dispositif d'engagement (6, 31) et du deuxième dispositif d'engagement (7, 32),
le circuit de commande (9) étant en outre configuré pour déterminer l'achèvement de l'opération d'engagement/désengagement de chacun du premier dispositif d'engagement (6, 31) et du deuxième dispositif d'engagement (7, 32) sur la base d'un résultat de comparaison entre la quantité physique se rapportant à une course du chacun du premier dispositif d'engagement (6, 31) et du deuxième dispositif d'engagement (7, 32) et un seuil prédéterminé.

3. Système de commande pour le véhicule hybride (Ve) selon l'une quelconque des revendications 1 à 2, comprenant en outre :
un dispositif d'actionnement (33, 34) qui est actionné pour actionner les dispositifs d'engagement (6, 7, 31, 32) lorsqu'il est activé ; et
un relais (35) qui interrompt de manière sélective une alimentation en courant du dispositif d'actionnement (33, 34) en fonction d'un signal de commande,
le circuit de commande (9) étant en outre configuré pour engager ou désengager les dispositifs d'engagement (6, 7, 31, 32) en commandant le relais (35).

4. Système de commande pour le véhicule (Ve) selon l'une quelconque des revendications 1 à 3, dans lequel chacun du premier dispositif d'engagement (6, 31) et du deuxième dispositif d'engagement (7, 32) comprend un embrayage à crabot.
